# EUROPEAN PATENT APPLICATION

(11) **EP 4 527 484 A1**
(43) Date of publication of application: **26.03.2025**
(21) Application number: 23757185.6
(22) Date of filing: 18.05.2023
(51) Int. Cl.: B01D 53/14, B01D 53/62, B01D 53/78, B01D 53/18

(54) **MULTI-STAGE AMMONIA DECARBURIZATION METHOD**

(30) Priority: 20.05.2022 CN 202210553333
(71) Applicant: Jiangsu New Century Jiangnan Environmental Protection Inc., Ltd, Nanjing, Jiangsu 211100 (CN)
(72) Inventor: ZHANG, Jun, Jiangsu 211100 (CN); QI, Lifang, Jiangsu 211100 (CN); WANG, Jinyong, Jiangsu 211100 (CN); LUO, Jing, Jiangsu 211100 (CN)
(74) Representative: Bottero, Carlo
(86) International application number: PCT/CN2023/095042
(87) International publication number: WO 2023/222082

(57) **Abstract**

The invention relates to a method for multi-stage ammonia-process decarbonization, the method comprising absorbing, using ammonia as an absorbent, CO₂ from a process gas in an absorber including four or more stages of absorption, the four or more stages including, sequentially arranged along the flow direction of the process gas, a first-stage absorption, a second-stage absorption, a third-stage absorption, a fourth-stage absorption, and an optional higher stage absorption; and controlling a temperature of the process gas in the second- and third-stage absorptions to be not lower than a temperature of the process gas in the first-stage absorption, and a temperature of the process gas in the fourth- and the optional higher-stage absorptions to be lower than the temperature of the process gas in the first-stage absorption.

## Description

### CROSS REFERENCE TO RELATED APPLICATION

This application claims priority to and the benefit of Chinese patent application No. 202210553333.1 filed on May 20, 2022, the disclosure of which is incorporated herein by reference in its entirety.

### TECHNICAL FIELD

The present invention relates to the technical field of environmental protection, and in particular to a multi-stage decarbonization method with improved capture efficiency of CO₂ in a process gas.

### BACKGROUND

Climate warming is a problem that affects the development of the whole human race, and CO₂ is the main contributor to climate warming. Industrial gases produced from production activities in the chemical industry contain a large amount of CO₂. In order to control CO₂ emissions on a large scale and combat climate warming, it is necessary to focus on developing technologies that can efficiently capture CO₂.

The chemical absorption method using ammonia water as an absorption liquid has the characteristics of strong absorption capacity, low corrosion, low regeneration energy consumption, low replenishment cost, not ease for the absorbent to be degraded by other components in the flue gas, and simultaneously removing of multiple acidic gas pollutants, and has been widely studied by technicians at home and abroad.

Patent No. CN102078743B discloses an improved CO₂ inorganic absorbent which includes a carbonated ammonia solution and an additive. The total ammonia mass fraction of the carbonated ammonia solution is 4% to 12%, the additive is sodium phosphate or potassium phosphate, the ratio of the molar concentration of the additive to the total ammonia molar concentration of the carbonated ammonia solution is 0.04 to 0.20, and the balance is deionized water. This invention improves decarbonization efficiency and reduces ammonia escape by controlling the composition of the CO₂ inorganic absorbent. However, the use of the additive may affect the product purity of ammonium bicarbonate.

Patent application No. CN102688676A discloses an ammonia-process decarbonization process for power plant flue gas. The flue gas is cooled to 45°C to 55°C by means of desulfurization and dust removal, then enters a decarbonization absorption tower and is in countercurrent contact with an absorption liquid in the decarbonization absorption tower, where the total ammonia mass fraction of the absorption liquid is controlled at 3% to 5%, such that CO₂ in the flue gas is absorbed. Then, the absorption rich solution after absorbing CO₂ is introduced into a regeneration tower, and the rich solution is heated to desorb and release CO₂, where the desorption temperature is 85°C to 95°C. Then, the absorption liquid returns to the decarbonization absorption tower to start a new round of absorption. Sodium bicarbonate or potassium bicarbonate is added in the absorption liquid, and the concentration of the sodium bicarbonate or potassium bicarbonate added is 0.1 mol/L to 0.5 mol/L. This technology is an ammonia-process decarbonization process for power plant flue gas that has high CO₂ desorption rate, maintains unchanged CO₂ loading in the absorption fluid during the recycling process, and ensures the absorption capacity of the solution for CO₂.

Patent application No. CN103007719A discloses a double-circulation ammonia-process decarbonization device for flue gas. The device is designed with two circulation sections in which a solid product is separated from the bottom portion, in order to solve the problems suffered by the existing devices for absorbing carbon dioxide in power plant flue gas in the ammonia process that the absorption efficiency is not high and the device is prone to blockage. This device proposes solving the problem of solid blockage only by providing two circulation sections, without considering the relationship between ammonia-process decarbonization absorption and temperature control.

Patent application No. CN200880122376.2 discloses a multi-stage CO₂ removal system and method for processing a flue gas stream. By use of an absorber container, the flue gas stream is contacted with an ionic solution containing ammonia under a low-temperature condition of 0°C to 20°C, and the solution in the first absorption stage has a higher temperature and a lower ammonia-to-carbon ratio than the solution in the third absorption stage. Ammonia escape can be reduced by controlling at a low temperature and making the third stage have a lower temperature. However, a higher ammonia-to-carbon ratio of the third stage increases ammonia escape.

Therefore, there remains a need for an ammonia-process decarbonization process that exhibits high absorption efficiency and can effectively control ammonia escape.

### SUMMARY OF THE INVENTION

In order to overcome the problems of low absorption efficiency and serious ammonia escape suffered by the existing ammonia-based decarbonization processes, the inventors have conducted diligent research. As a result, it has been found that high absorption efficiency and effective ammonia escape control of the ammonia-based decarbonization process can be achieved by providing four or more stages of absorption and controlling the temperature profile of the individual absorption stages, optionally in combination with the control of ammonia addition. Accordingly, the invention has been made.

Thus, an object of the present invention is to provide a method for multi-stage ammonia-process decarbonization, the method comprising absorbing, using ammonia as an absorbent, CO₂ from a process gas in an absorber including four or more stages of absorption, the four or more stages including, sequentially arranged along the flow direction of the process gas, a first-stage absorption, a second-stage absorption, a third-stage absorption, a fourth-stage absorption, and an optional higher stage absorption; and controlling: a temperature of the process gas in the second- and third-stage absorptions to be not lower than a temperature of the process gas in the first-stage absorption, and a temperature of the process gas in the fourth- and the optional higher-stage absorptions to be lower than the temperature of the process gas in the first-stage absorption.

The method of the present invention can effectively reduce energy consumption, increase absorption efficiency, and effectively control ammonia escape.

A further object of the present invention is to provide an apparatus for carrying out the method of the present invention, comprising:
a first-stage absorption vessel, a second-stage absorption vessel, a third-stage absorption vessel, a fourth-stage absorption vessel, and an optional higher-stage absorption vessel, sequentially arranged along the flow direction of the process gas;
an ammonia addition unit that is configured to supply an ammonia absorbent to one or more of the absorption vessels; and
a temperature control means that is configured to control process gas temperatures:
   in the second- and third-stage absorption vessels to be not lower than a temperature of the process gas in the first-stage absorption vessel;
   in the fourth- and the optional higher-stage absorption vessels to be lower than the temperature of the process gas in the first-stage absorption vessel.

### BRIEF DESCRIPTION OF THE DRAWINGS

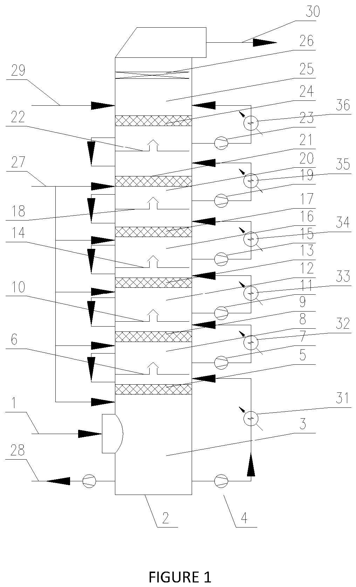

FIG. 1 is a schematic diagram of an ammonia-process decarbonization apparatus in accordance to some embodiments of the present invention.

Meanings of the reference numerals in FIG. 1 are as follows: 1. Process gas; 2. Absorber; 3. First-stage absorption of the absorber; 4. First-stage circulation pump; 5. First-stage packing; 6. First-stage liquid collector; 7. Second-stage circulation pump; 8. Second-stage absorption of the absorber; 9. Second-stage packing; 10. Second-stage liquid collector; 11. Third-stage circulation pump; 12. Third-stage absorption of the absorber; 13. Third-stage packing; 14. Third-stage liquid collector; 15. Fourth-stage circulation pump; 16. Fourth-stage absorption of the absorber; 17. Fourth-stage packing; 18. Fourth-stage liquid collector; 19. Fifth-stage circulation pump; 20. Fifth-stage absorption of the absorber; 21. Fifth-stage packing; 22. Fifth-stage liquid collector; 23. Sixth-stage circulation pump; 24. Sixth-stage packing; 25. Sixth-stage absorption of the absorber; 26. Demister; 27. Ammonia; 28. Ammonium bicarbonate solution/slurry; 29. Water replenishing; 30. Decarbonized gas; 31. First-stage heat exchanger; 32. Second-stage heat exchanger; 33. Third-stage heat exchanger; 34. Fourth-stage heat exchanger; 35. Fifth-stage heat exchanger; 36. Sixth-stage heat exchanger.

### DETAILED DESCRIPTION OF PREFERRED EMBODIMENTS

In a first aspect, the disclosure relates to a method for multi-stage ammonia-process decarbonization, the method comprising:
absorbing, using ammonia as an absorbent, CO₂ from a process gas in an absorber including four or more stages of absorption, the four or more stages including, sequentially arranged along the flow direction of the process gas, a first-stage absorption, a second-stage absorption, a third-stage absorption, a fourth-stage absorption, and an optional higher stage absorption; and
controlling a temperature of the process gas in the second- and third-stage absorptions to be not lower than a temperature of the process gas in the first-stage absorption, and a temperature of the process gas in the fourth- and the optional higher-stage absorptions to be lower than the temperature of the process gas in the first-stage absorption.

As those skilled in the art can understand, water can be used as an absorption medium in the method of the present disclosure.

In some embodiments, a temperature of the process gas in the second- and third-stage absorptions is controlled to be higher than a temperature of the process gas in the first stage by at least 1°C, preferably at least 2°C, and more preferably at least 3°C. Preferably, the temperature of the process gas in the second- and third-stage absorptions is controlled to be higher than the temperature of the process gas in the first-stage absorption by no more than 30°C, preferably no more than 25°C, and more preferably no more than 20°C.

In some embodiments, a temperature of the process gas in the fourth- and any optional higher-stage absorptions is controlled to be lower than the temperature of the process gas in the first-stage absorption by at least 1°C, preferably at least 2°C, and more preferably at least 3°C. Preferably, the temperature of the process gas in the fourth- and any optional higher-stage absorptions is controlled to be lower than the temperature of the process gas in the first-stage absorption by no more than 25°C, preferably no more than 20°C, and more preferably no more than 15°C.

In the present method, multi-stage ammonia addition is performed in the absorber, and an ammonia addition amount into a circulating liquid in the last stage of decarbonization absorption is lower than that in the previous stage, or no ammonia is added into a circulating liquid in the last stage of decarbonization absorption. The addition of ammonia into the absorption circulating liquid may result in the formation of carbamate or carbonate. Thus, this manner of ammonia addition, i.e., the ammonia addition amount into a circulating liquid in the last stage of decarbonization absorption is lower than that in the previous stage or no ammonia is added into a circulating liquid in the last stage of decarbonization absorption, is beneficial for reducing the formation of carbamate or carbonate and also for controlling ammonia escape.

In some embodiments, the ammonia addition amount into the circulating liquid in the last stage of decarbonization absorption is 20wt% or less, preferably 10wt% or less, more preferably 5wt% or less, and even more preferably 0wt%, of the total ammonia addition amount in the whole process.

In some embodiments, a temperature of the process gas in the second-stage absorption and a temperature of the process gas in the third-stage absorption are controlled to be the same.

In some embodiments, the temperature of the process gas in the second-stage absorption is controlled to be lower than the temperature of the process gas in the third-stage absorption by, for example, at least 1°C, or 2°C, or 3°C.

In some embodiments, the temperature of the process gas in the first-stage absorption is controlled to be in a range of from 10°C to 30°C; the temperatures of the process gas in the second- and third-stage absorptions are controlled to be in a range of from 15°C to 35°C; and the temperatures of the process gas in the fourth- and the optional higher-stage absorptions are controlled to be in a range of from 5°C to 25°C, with a proviso that the temperatures of the process gas in the second- and third-stage absorptions are not lower than the temperature of the process gas in the first-stage absorption, and the temperatures of the process gas in the fourth- and the optional higher-stage absorptions are lower than the temperature of the process gas in the first-stage absorption.

In some embodiments, the method of the disclosure comprises controlling a temperature of the process gas and/or an amount of ammonia added in the first-stage absorption to promote the generation of ammonium bicarbonate in the first-stage absorption.

In some embodiments, multi-stage ammonia addition is performed in the absorber, and an ammonia addition amount into a circulating liquid in the first-stage of decarbonization absorption is lower than that in the second-stage of decarbonization absorption, or no ammonia is added into a circulating liquid in the first-stage of decarbonization absorption. Preferably, the ammonia addition amount into the circulating liquid in the first-stage of decarbonization absorption is 70wt% or less, for example, 50wt% or less, 30wt% or less, or 10wt% or less, of the ammonia addition amount into the circulating liquid in the second-stage of decarbonization absorption. Such an ammonia addition manner may help to increase the production of ammonium bicarbonate.

In some embodiments, the method of the disclosure further comprises collecting in the first-stage absorption an ammonium bicarbonate solution or slurry; and producing from the solution or slurry solid ammonium bicarbonate.

In some embodiments, the multi-stage absorption systems of the absorber are combined into one or more towers, and a device/component that allows gas to pass through is disposed between the stages.

In some embodiments, at least one layer of circulating liquid distributor is disposed in each stage of absorption.

In some embodiments, at least one layer of gas-liquid contact component is disposed in each stage of absorption, and the gas-liquid contact component is preferably packing.

In some embodiments, the method of the disclosure further comprises reducing a temperature of a circulating liquid fed to the stages by use of a heat exchanger; and reducing a temperature of the process gas by spraying the circulating liquid at the process gas.

In the method of the disclosure, among multi-stage absorption liquids sequentially used along a flow direction of the process gas, a previous stage absorption liquid is replenished with the immediately following stage absorption liquid, and the last stage absorption liquid is replenished with water.

In a second aspect, the disclosure provides an apparatus for carrying out the method of the present invention, comprising:
a first-stage absorption vessel, a second-stage absorption vessel, a third-stage absorption vessel, a fourth-stage absorption vessel, and an optional higher-stage absorption vessel, sequentially arranged along the flow direction of the process gas;
an ammonia addition unit that is configured to supply an ammonia absorbent to one or more of the absorption vessels; and
a temperature control means that is configured to control a temperature of the process gas in the second- and third-stage absorptions to be not lower than a temperature of the process gas in the first-stage absorption, and a temperature of the process gas in the fourth- and the optional higher-stage absorptions to be lower than the temperature of the process gas in the first-stage absorption.

In some embodiments, in the apparatus of the disclosure, the ammonia addition unit is configured to supply the ammonia absorbent to multi-stage absorption vessels, with an amount of ammonia added to a decarbonization circulating liquid in the last stage absorption vessel being less than that added in the immediately preceding stage or no ammonia added to decarbonization circulating liquid in the last stage absorption vessel.

In some embodiments, in the apparatus of the disclosure, the ammonia addition unit is configured to supply the ammonia absorbent to multi-stage absorption vessels, with an amount of ammonia added to a decarbonization circulating liquid in the first-stage absorption vessel being less than that added in the second-stage or no ammonia added to the decarbonization circulating liquid in the first-stage.

In some embodiments, in the apparatus of the disclosure, the temperature control means is configured to control temperatures of the process gas in the second- and third-stage absorptions to be the same.

In some embodiments, in the apparatus of the disclosure, the temperature control means is configured to control the temperature of the process gas in the second-stage absorption to be lower than the temperature of the process gas in the third-stage absorption.

In some embodiments, in the apparatus of the disclosure, the temperature control means is configured to control: the temperature of the process gas in the first-stage absorption to be in a range of from 10°C to 30°C; the temperatures of the process gas in the second- and third-stage absorptions to be in a range of from 15°C to 35°C; and the temperatures of the process gas in the fourth- and the optional higher-stage absorptions to be in a range of from 5°C to 25°C, with a proviso that the temperatures of the process gas in the second- and third-stage absorptions are not lower than the temperature of the process gas in the first-stage absorption, and the temperatures of the process gas in the fourth- and the optional higher-stage absorptions are lower than the temperature of the process gas in the first-stage absorption.

In some embodiments, the apparatus of the disclosure further comprises an ammonium bicarbonate post-treatment unit that is configured to receive an ammonium bicarbonate solution or slurry from the first-stage absorption and produce solid ammonium bicarbonate therefrom.

In some embodiments, in the apparatus of the disclosure, the multi-stage absorption vessels are combined into one or more towers, and a device/component that allows gas to pass through is disposed between the stages.

In some embodiments, in the apparatus of the disclosure, at least one layer of circulating liquid distributor is disposed in each stage absorption.

In some embodiments, in the apparatus of the disclosure, at least one layer of gas-liquid contact component, for example, packing, is disposed in each stage absorption.

In some embodiments, in the apparatus of the disclosure, among multi-stage absorption liquids sequentially used along a flow direction of the process gas, a previous stage absorption liquid is replenished with the immediately following stage absorption liquid, and the last stage absorption liquid is replenished with water.

An illustrative embodiment of the apparatus/method of the invention will now be described with reference to the accompanying drawings. A process gas 1 containing carbon dioxide enters an absorber 2, and is first subjected to first-stage absorption 3. A liquid is pumped to the top portion of the first stage by means of a first-stage circulation pump 4, flows through a first-stage packing 5 and contacts the process gas, and then returns to the bottom portion of the first stage. The first-stage circulating liquid is cooled by means of a heat exchanger 31, and the temperature of the process gas is reduced after the circulating liquid contacts the process gas. Ammonia 27 is added into the first-stage absorption liquid through a pipe, and carbon dioxide in the process gas is absorbed by liquid-gas contact. The process gas subjected to the first-stage absorption and cooling enters the second-stage absorption through a liquid collector 6, and the process procedure in the second stage is the same as that in the first stage. A second-stage absorption liquid overflows to the first-stage absorption. The process gas subjected to the second-stage absorption and cooling enters the third-stage absorption through a liquid collector 10, and the process procedure in the third stage is the same as that in the first stage. A third-stage absorption liquid overflows to the second-stage absorption. The treated process gas then passes through similar third-stage absorption, fourth-stage absorption, fifth-stage absorption, and sixth-stage absorption sequentially.

The ammonium bicarbonate solution/slurry is discharged from the bottom portion of the first-stage absorption through a pump for the production of solid ammonium bicarbonate (not shown).

Water replenishing 29 for the system is fed to the sixth-stage absorption. A demister is disposed at the top portion of the sixth-stage absorption, and the demisted process gas is discharged from the tower top.

### EXAMPLE 1

Ammonia-process decarbonization was performed by using the apparatus shown in the accompanying drawing.

In the method, the amount of ammonia added to a first-stage absorption liquid was 2wt% of the total ammonia addition amount, the amount of ammonia added to a second-stage absorption liquid was 8wt% of the total ammonia addition amount, the amount of ammonia added to a third-stage absorption liquid was 40wt% of the total ammonia addition amount, the amount of ammonia added to a fourth-stage absorption liquid was 40wt% of the total ammonia addition amount, the amount of ammonia added to a fifth-stage absorption liquid was 10wt% of the total ammonia addition amount, and no ammonia was added to a sixth-stage absorption liquid.

The temperatures in the individual absorption stages were controlled as follows:
first stage: 25°C
second stage: 30°C
third stage: 33°C
fourth stage: 22°C
fifth stage: 22°C
sixth stage: 22°C
99.6% liquid ammonia was used as the absorbent for decarbonization, and the parameters of the process gas before decarbonization are shown in the table below:

| No. | Item | Value |
|---|---|---|
| 1 | Gas flow, Nm³/h | 80000 |
| 2 | Temperature, °C | 30 |
| 3 | SO₂ content, mg/Nm³ | 5 |
| 4 | CO₂ content, v% (volume-percent) | 13 |
| 5 | NH₃ content, ppm | 3 |

The main parameters after treatment by the decarbonization tower are shown in the table below:

| No. | Item | Value |
|---|---|---|
| 1 | Gas flow at decarbonization tower outlet, Nm³/h | 73896 |
| 2 | CO₂ content at decarbonization tower outlet, v% | 5.75 |
| 3 | NH₃ content at decarbonization tower outlet, ppm | 1000 |
| 4 | Decarbonization efficiency, % | 60 |
| 5 | Byproduct ammonium bicarbonate amount, t/h | 22.5 |
| 6 | 99.6% liquid ammonia consumption, t/h | 4.86 |

### COMPARATIVE EXAMPLE 1

Compared with Example 1, the only difference was ammonia addition. Ammonia was added in all of the first- to sixth-stage decarbonization absorption regions with equivalent ammonia addition amounts in the six stages.

Because the ammonia addition amount in the first-stage decarbonization absorption region reached 16.7%, it was difficult for the ammonium bicarbonate to generate in the solution, and ammonium bicarbonate crystals were not obtained. The ammonia addition amount in the six-stage decarbonization absorption region reached 16.7%, resulting in a large increase in the escape amount of ammonia for decarbonization, with the ammonia escape amount in the process gas having been subjected to decarbonization being up to 5000 ppm. Accordingly, a subsequent ammonia removal unit had an increased ammonia removal load.

Main parameters of the gas after decarbonization are shown in the table below:

| No. | Item | Value |
|---|---|---|
| 1 | Gas flow at decarbonization absorption tower outlet, Nm³/h | 77339 |
| 2 | CO₂ content at decarbonization absorption tower outlet, v% | 8.11 |
| 3 | NH₃ content at decarbonization absorption tower outlet, ppm | 5000 |
| 4 | SO₂ content at decarbonization absorption tower outlet, mg/Nm³ | 5 |
| 5 | Decarbonization efficiency, % | 40 |
| 6 | Byproduct ammonium bicarbonate amount, t/h | 15.0 |
| 7 | 99.6% liquid ammonia consumption, t/h | 3.39 |

### COMPARATIVE EXAMPLE 2

Compared with Example 1, the only difference was temperature control. The temperature of the first-stage decarbonization absorption region was 25°C, and the temperatures of the second- to sixth-stage decarbonization absorption regions were the same, all set to 22°C.

Because the second- and third-stage decarbonization absorption regions were controlled to a relatively low temperature and therefore had a reduced temperature difference from a cold source, heat exchange areas required by the heat exchangers 32 and 33 were increased as compared with the heat exchange areas in Example 1, thereby increasing the equipment investment cost. Also, when the ambient temperature is 22°C, a cold source used for the heat exchangers 32 and 33 for the second- and third-stage decarbonization absorption regions in Example 1 may be low-temperature ambient air which is cooled by an air cooler, thereby saving the operating cost. In comparative example 2, because the ambient temperature and the target temperature are the same, both set to 22°C, it was impossible to cool with an air cooler, and chilled water with high energy consumption was used for cooling.

## Claims

1. A method for multi-stage ammonia-process decarbonization, the method comprising:
absorbing, using ammonia as an absorbent, CO₂ from a process gas in an absorber including four or more stages of absorption, the four or more stages including, sequentially arranged along the flow direction of the process gas, a first-stage absorption, a second-stage absorption, a third-stage absorption, a fourth-stage absorption, and an optional higher stage absorption; and
controlling a temperature of the process gas in the second- and third-stage absorptions to be not lower than a temperature of the process gas in the first-stage absorption, and a temperature of the process gas in the fourth- and the optional higher-stage absorptions to be lower than the temperature of the process gas in the first-stage absorption.

2. The method of claim 1, having at least one of the following features:
- multi-stage ammonia addition is performed in the absorber, and an ammonia addition amount into a circulating liquid in the last stage of decarbonization absorption is lower than that in the previous stage, or no ammonia is added into a circulating liquid in the last stage of decarbonization absorption;
- multi-stage ammonia addition is performed in the absorber, and an ammonia addition amount into a circulating liquid in the first-stage of decarbonization absorption is lower than that in the second-stage of decarbonization absorption, or no ammonia is added into a circulating liquid in the first-stage of decarbonization absorption.

3. The method of claim 1, having at least one of the following features:
- a temperature of the process gas in the second-stage absorption and a temperature of the process gas in the third-stage absorption are controlled to be the same, or a temperature of the process gas in the third-stage absorption is controlled to be higher than a temperature of the process gas in the second-stage absorption;
- a temperature of the process gas in the first-stage absorption is controlled to be in a range of from 10°C to 30°C;
temperatures of the process gas in the second- and third-stage absorptions are controlled to be in a range of from 15°C to 35°C;
temperatures of the process gas in the fourth- and the optional higher-stage absorptions are controlled to be in a range of from 5°C to 25°C;
with a proviso that the temperatures of the process gas in the second- and third-stage absorptions are not lower than the temperature of the process gas in the first-stage absorption, and the temperatures of the process gas in the fourth- and the optional higher-stage absorptions are lower than the temperature of the process gas in the first-stage absorption.

4. The method of claim 1, having at least one of the following features:
- a temperature of the process gas in and an amount of ammonia added into the first-stage absorption are controlled to promote the generation of ammonium bicarbonate in the first-stage absorption;
- an ammonium bicarbonate solution or slurry is collected in the first-stage absorption and used for the production of solid ammonium bicarbonate therefrom.

5. The method of claim 1, having at least one of the following features:
- the absorber is combined into one or more towers, and a device/component that allows gas to pass through is disposed between the stages;
- at least one layer of circulating liquid distributor is disposed in each stage of absorption;
- at least one layer of gas-liquid contact component is disposed in each stage of absorption, and the gas-liquid contact component is preferably packing;
- a temperature of a circulating liquid is reduced by use of a heat exchanger, and a temperature of the process gas is reduced by spraying the circulating liquid;
- among multi-stage absorption liquids sequentially used along a flow direction of the process gas, a previous stage absorption liquid is replenished with the immediately following stage absorption liquid, and the last stage absorption liquid is replenished with water.

6. An apparatus for carrying out the method of any one of claims 1 to 5, comprising:
a first-stage absorption vessel, a second-stage absorption vessel, a third-stage absorption vessel, a fourth-stage absorption vessel, and an optional higher-stage absorption vessel;
an ammonia addition unit that is configured to supply an ammonia absorbent to one or more of the absorption vessels; and
a temperature control means that is configured to control a temperature of the process gas in the second- and third-stage absorptions to be not lower than a temperature of the process gas in the first-stage absorption, and a temperature of the process gas in the fourth- and the optional higher-stage absorptions to be lower than the temperature of the process gas in the first-stage absorption.

7. The apparatus of claim 6, having at least one of the following features:
- the ammonia addition unit is configured to supply the ammonia absorbent to multi-stage absorptions, with an amount of ammonia added to a decarbonization circulating liquid in the last stage absorption being less than that in the immediately preceding stage or no ammonia added to a decarbonization circulating liquid in the last stage absorption;
- the ammonia addition unit is configured to supply the ammonia absorbent to multi-stage absorptions, with an amount of ammonia added to a decarbonization circulating liquid in the first-stage absorption being less than that in the second-stage absorption or no ammonia added to a decarbonization circulating liquid in the first-stage absorption;
- the temperature control means is configured to control temperatures of the process gas in the second- and third-stage absorptions to be the same, or the temperature control means is configured to control the temperature of the process gas in the second-stage absorption to be lower than the temperature of the process gas in the third-stage absorption;
- the temperature control means is configured to control: a temperature of the process gas in the first-stage absorption to be in a range of from 10°C to 30°C; temperatures of the process gas in the second- and third-stage absorptions to be in a range of from 15°C to 35°C; and temperatures of the process gas in the fourth- and the optional higher-stage absorptions to be in a range of from 5°C to 25°C, with a proviso that the temperatures of the process gas in the second- and third-stage absorptions are not lower than the temperature of the process gas in the first-stage absorption, and the temperatures of the process gas in the fourth- and the optional higher-stage absorptions are lower than the temperature of the process gas in the first-stage absorption.

8. The apparatus of claim 6, further comprising an ammonium bicarbonate post-treatment unit that is configured to receive an ammonium bicarbonate solution or slurry from the first-stage absorption and produce solid ammonium bicarbonate therefrom.

9. The apparatus of claim 6, having at least one of the following features:
- the multi-stage absorptions are combined into one or more towers, and a device/component that allows gas to pass through is disposed between the stages;
- at least one layer of circulating liquid distributor is disposed in each stage absorption;
- at least one layer of gas-liquid contact component, preferably packing, is disposed in each stage absorption;
- the apparatus is configured so that among multi-stage absorption liquids sequentially used along a flow direction of the process gas, a previous stage absorption liquid is replenished with the immediately following stage absorption liquid, and the last stage absorption liquid is replenished with water.
